# EUROPEAN PATENT APPLICATION

(11) **EP 1 271 221 A1**
(43) Date of publication of application: **02.01.2003**
(21) Application number: 01115857.3
(22) Date of filing: 28.06.2001
(51) Int. Cl.: G02F 1/035

(54) **Integrated optical waveguide device**

(71) Applicant: Corning O.T.I. S.p.A., 20126 Milano (IT)
(72) Inventor: Pruneri, Valerio, 23033 Grosio (SO) (IT)
(74) Representative: Grunfeld, David Peter

(57) **Abstract**

An integrated optical waveguide device, for example an optical phase modulator or an optical intensity modulator or a frequency converter, comprises a substrate **(10)** of a ferroelectric material having a first **(11)** and a second **(12)** surfaces perpendicular to a direction of spontaneous polarization of the ferroelectric material. At least the second surface is substantially inactive with respect to an operation of applying an externally generated electric field to the substrate. The device has at least one waveguide **(18,19)** integrated in the substrate in correspondence of the first surface thereof. At least a longitudinal waveguide section of the at least one waveguide is formed in a respective first substrate region **(14,15;50)** having a first orientation of spontaneous polarization. At least one second substrate region **(15,14;51,52)** is provided on the first surface adjacent to the first substrate region transversally to the longitudinal waveguide section. The second substrate regions has a second orientation of spontaneous polarization, opposite to the first orientation, so as to develop an electric field component tangential to the first surface in consequence to polarization or free charges generated by one or more of the pyroelectric, piezoelectric and photovoltaic effects. A material layer **(117)** is associated with the first surface and contains mobile charges so that, under the action of the tangential electric field component, a displacement of the mobile charges is induced which substantially compensates the polarization or free charges in the substrate to significantly reduce an electric field component perpendicular to the first surface at least where the longitudinal waveguide section is integrated.

## Description

The present invention relates generally to the field of integrated optics. More specifically, the invention relates to integrated optical waveguide devices in which optical beams propagate through optical waveguides integrated in a substrate material. Particularly, but not limitatively, the invention relates to frequency converters and electro-optical modulators, that are devices whose operation is based on the electro-optic effect. Examples of electro-optical modulators are phase modulators or intensity modulators, for instance interferometric modulators of the Mach-Zehnder type.

Integrated optical waveguide devices, such as modulators and switches, are often fabricated on substrates of ferroelectric materials. Among all the known substrate materials, lithium niobate (LiNbO₃) is probably the most widely used because of the remarkable electro-optic properties thereof and the possibility it offers of forming low loss optical waveguides. Another known substrate material is for example lithium tantalate (LiTaO₃).

The electro-optic effect is a second-order non-linear property which is characterised by a tensor. This tensor relates the polarization changes at optical frequencies (*i.e.*, refractive index changes) of the material to low-frequency modulating electric fields, that is modulating electric fields at frequencies much lower than those of the optical fields. Phase and amplitude modulation of optical fields can be obtained by applying external electric fields, which modify the material refractive index via the electro-optic effect.

Overlooking, for simplicity, the tensorial nature of the electro-optic effect, the refractive index change Δn(ω) at the optical frequency ω is proportional to the product of an electro-optic coefficient r and the modulating electric field Eo: Δn(ω) ∝ r·Eo.

In the case of a LiNbO₃ crystal the electro-optic coefficient having the highest value is r₃₃ ≈ 30 pm/V. The electro-optic coefficient r₃₃ relates the refractive index change experienced by electromagnetic waves polarised along the c (also called z) crystal axis to the component of the modulating electric field along the same axis.

For this reason LiNbO₃ crystal substrates are generally made available in z-cut slices, with the z crystal axis normal to the surfaces of largest area, since this configuration is the one ensuring superior modulation performances even at relatively high modulation frequencies.

In addition to the electro-optic properties, ferroelectric materials show other properties such as pyroelectricity, piezoelectricity and photorefractivity.

As known, the pyroelectric effect is a change in spontaneous polarization of the material due to relatively quick temperature drifts, while the piezoelectric effect is a change in spontaneous polarization due to mechanical stresses causing material deformation. By photorefractive effect, optically induced changes in the refractive index are intended.

These properties have a detrimental effect on the integrated optics devices, preventing them from performing the desired functions.

Free or polarization charges can in fact be generated in the ferroelectric material substrate when it is subjected to changes of parameters such as temperature drifts, mechanical stresses and short wavelength light intensity. These charges may induce a substantial electric field in the regions of the substrate where the optical waveguides for the propagating optical modes are located.

Through the electro-optic effect these electric fields give rise to substantial refractive index changes. The effect of these electric fields on the refractive index is similar to that of the modulating electric field: if E is the electric field induced in the material by the free or polarization charges, the change in the refractive index at the optical frequency ω is Δn(ω) ∝ r·E.

In particular, the electric fields along the z axis of the crystal are those more relevant because they produce refractive index changes along the z axis itself, which is the axis along which the electromagnetic waves are usually polarized to experience maximum electro-optic modulation.

In lithium niobate the superior electro-optic properties are accompanied by stronger pyroelectric, piezoelectric and photorefractive properties compared to other ferroelectric materials. Moreover, in lithium niobate the pyroelectric fields, *i.e*. the electric fields generated in the material by the pyroelectric effect, are directed along the z crystal axis, which as mentioned is also the axis showing the highest electro-optic coefficient.

As an example of a typical situation, let a Mach-Zehnder integrated waveguide electro-optic modulator be considered. Such a device is widely used in integrated optics, for instance because it allows to modulate the intensity of an optical beam.

Changes of temperature, mechanical stresses, irradiation by light determine the appearance of free or polarization charges and consequently electric fields may be created in the region of the substrate where the interferometer arms are formed. These charges induce by electro-optic effect refractive index changes which modify the optical modes propagation through the waveguides. In other words, the propagation of the optical modes through the interferometer arms is influenced not only by the applied modulating electric fields but also by the electric fields generated by the piezoelectric and/or pyroelectric effects. These changes give rise to the so called DC-drift in the optical response of the device, whereby the optical response of the device changes with a long-term time constant.

When the temperature changes or the mechanical stresses are slow enough, the external fields (generated by fringe effects or non-perfect screening of charges of opposite sign) may attract enough free charges to the substrate surfaces, which compensate for the internal polarization charges. Compensation of the internal polarization charges may also be due to currents through the crystal associated with bulk conductivity. In this way a quasi-neutral situation is restored and the electric fields reduced.

The situation is different when there are changes in temperature and/or mechanical stresses which are relatively fast, thus preventing the charge compensation process to take place.

In addition, asymmetries in the geometrical structure of the modulator (for example in the position of the two waveguiding arms with respect to the metal electrodes) can create a non-uniform influence of the pyroelectric and/or piezoelectric effects, thus making the changes in device response more dramatic and difficult to control.

In order to provide an idea of the impact of these effects, let a substrate be considered of z-cut lithium niobate, with waveguide regions located under one of the surfaces perpendicular to the z crystal axis. Let it be supposed that the substrate is subjected to pyroelectric effect (the reasoning can be extended to other effects which produce charges in a similar manner, such as the piezoelectric and photovoltaic effects). If there is a relatively quick temperature change there will be the formation of an uncompensated surface charge density of the order of -4x10⁻⁵ C/Km². The negative sign of this coefficient implies that the z+ surface of the crystal (*i.e.,* the surface towards which the z axis is oriented) will become populated by polarization charges of negative sign when the temperature increases, whereas the opposite z- surface will become populated of positive polarization charges. The opposite is true for a decrease in temperature. As a consequence of this surface charge distribution, an electric field E will be induced along the z crystal axis, which will be uniform inside almost the whole crystal. In fact there will be fringe-field effects at the edge of the substrate, but these non-uniformities do not affect significantly the waveguide regions, which are usually located far from the substrate edges. The substrate itself is usually relatively large compared to its thickness. The electric field E can thus be considered uniform and directed along the z axis in the waveguide regions, with an amplitude of approximately 1.6x10⁵ V/m for each K temperature change.

Several solutions have been proposed to suppress the DC-drift phenomenon due to pyroelectric or piezoelectric effects.

Some of the proposed solutions call for using conductive material films which contain mobile charges to produce a fast redistribution of charges, hence the reduction or suppression of detrimental fields.

For example, US 5,621,839 describes an optical waveguide device having a substrate made of an x-cut ferroelectric crystal such as LiNbO₃, LiTaO₃, Li(Nbₓ,Ta₁₋ₓ)O₃, with an optical waveguide formed on one major plane of the x-cut substrate. A first and a second conductive layers are respectively formed on the z- and z+ substrate crystal planes. The first and second conductive layers are electrically connected via a conductive layer formed on the major plane.

In other words, the z+ and z- substrate faces, *i.e.* the substrate faces perpendicular to the z crystal axis, along which the pyroelectric fields develop, are covered with conductive materials and are connected to each other through a conductive path.

This solution is quite straightforward for x-cut substrates, in which the optical waveguides are integrated in correspondence of one of the substrate faces perpendicular to the x crystal axis. However, devices formed in x-cut substrates are less efficient, in terms of electro-optic response, than devices made in z-cut substrates, in which the waveguides are integrated in correspondence of one of the z faces of the substrate.

The implementation of the above solution to devices integrated in z-cut substrates is difficult, because one of the surfaces which should be covered by a conductive material is also the surface on which driving electrodes for applying the modulating electric fields are placed. In this case, special materials must be used and/or special treatments must be contemplated, not to cause a short-circuit between the driving electrodes.

For example, in US 5,153,930 a device employing a substrate of a material that exhibits the pyroelectric effect is described. The device is manufactured forming two diffused titanium waveguides in a substrate of z-cut monocrystalline LiNbO₃. A buffer layer of SiO₂ is then formed over the front substrate surface. A thin film of titanium in a highly conductive state is deposited over the buffer layer, and a layer of Al is deposited over the thin film of titanium and patterned to define two discrete electrodes and a ring extending around the periphery of the thin film of titanium. A layer of Al is also deposited over the back substrate surface. The structure is then baked in an atmosphere of oxygen and nitrogen at temperatures in excess of about 250°C. During the baking, the exposed portions of the thin film of titanium are converted to a high resistivity state. A stripe of conductive paint is then applied to the side of the substrate to connect the ring to the Al layer deposited over the back surface. When a temperature change causes a pyroelectric field to be generated between the faces of the substrate, the stripe of conductive paint allows charge to be redistributed between the ring and the front and back Al layers to produce a counteracting field so that there is no net field in the substrate. This occurs within a time on the order of milliseconds, therefore the time required to achieve equilibrium between the pyroelectric field and the field due to surface charge is very short, and for most purposes no instability in performance of the switch due to change in temperature is observed.

In other words, the idea is that the top layer, where exposed, is conductive enough to allow for compensation of the pyroelectric field, without inducing too high dissipation of the power applied to the electrodes.

However, since the resistance of the high resistivity exposed portions of the thin film of titanium between the electrodes is finite and not infinite, and due to the fact that the front substrate surface is electrically connected to the Al layer on the back substrate surface, the low-frequency behaviour of the device is negatively affected.

US 5,214,724 describes an optical waveguide device using a substrate of z-cut lithium niobate in which a semiconductive layer of silicon, acting as a conductor in a low frequency band, is formed between the buffer layer of silicon dioxide and the driving electrodes and all over the buffer layer, so as to make uniform a distribution of surface charges occurring due to a change in temperature or the like and stabilize the characteristics of the optical waveguide device. Essentially, the silicon layer behaves as a conductor for low frequencies fields, such as those induced by pyroelectric effect, and as a dielectric for the higher frequency modulating fields.

In other words, the attempt in this case is to make the electric field caused by polarization charges induced by temperature changes uniform in the waveguides.

As mentioned before, changes in the refractive index of a ferroelectric material can also be induced optically, due to the photorefractive effect. In this case, charges are generated in the substrate via the photovoltaic effect, and via the electro-optic effect the resulting electric fields cause changes in the refractive index.

The photorefractive effect has been studied in connection with lithium niobate laser-diode-based second harmonic generation (SHG) devices, briefly frequency converters. As reported in V. Pruneri et al., 'Self-organised light-induced scattering in periodically poled lithium niobate', Appl. Phys. Lett., vol. 67, p. 1957 (1995), M. Taya et al., 'Photorefractive effects in periodically poled ferroelectrics', Optics Letters, vol. 21, p. 857 (1996) and B. Sturman et al., 'Mechanism of self-organised light-induced scattering in periodically poled lithium niobate', Appl. Phys. Lett., vol. 49, p. 1349 (1996), lithium niobate with periodic poling, that is periodic ferroelectric domain inversion, not only ensures quasi-phase-matching of non-linear optical processes, but it also reduce beam distortions caused by photorefractive effect. The mechanism behind this reduction consists in the fact that the photovoltaic current follows the direction of the z axis, so that a periodic-sign spatial charge distribution is created on the sides of the laser beam. This implies that the electric field along the z axis is significantly reduced when the beam size is bigger than the period of the structure. In fact an electric field modulation still exists over a depth (from the side of the laser beam) comparable to the period of the periodic domain structure.

In US 5,278,924 periodic poling has been proposed in connection with electro-optic modulators as a way for compensating phase velocity mismatches between optical modulation and an RF electric signal. More specifically, an integrated optic Mach-Zehnder interferometer with an asymmetric coplanar waveguide travelling wave electrode is formed in a substrate which has a ferroelectric domain that has inverted regions and non-inverted regions. The inverted and non-inverted regions extend parallelly to each other transversally to the interferometer arms, that is transversally to the waveguides, in alternated succession along the arms. The optical signal in each interferometer arm passes through the inverted and non-inverted regions of the ferroelectric domain. Each transition between inverted and non-inverted regions changes the sign of the induced phase modulation of the optical signal. This compensates for 180° phase difference between the modulation on the optical signal and the RF electric signal caused by the phase velocity mismatch between the RF and optical signals.

In US 6,055,342 ferroelectric domain inversion is exploited in an integrated optical intensity modulator to make the refractive index of an optical waveguide discontinuous with a staggered pattern, so that the light wave distribution mode is asymmetrical with respect to the center of the waveguide, to modulate a light wave with low insertion loss and a low driving voltage. Domain-inversion areas having domain reverse from the direction of spontaneous polarization of the substrate are arranged in a staggered pattern around the optical waveguide, with boundaries between domain-inversion areas and spontaneous polarization areas being at the center of the optical waveguide.

JP 07-191352 discusses the problems of an optical waveguide device, such as a directional coupling optical switch, in which mutual exchange of wave energy between the waveguides takes place. The device comprises a crystal substrate formed from a z-cut LiNbO₃ crystal, in which two optical waveguides are formed adjacent and parallel in the substrate surface. The device has a coupling region, that is the region of the substrate wherein the mutual exchange of wave energy between the waveguides takes place. Positive and negative electrodes are formed on the same substrate surface as the optical waveguides, with interposition of a buffer layer, and extend parallelly to each other in partial overlap with a respective waveguide. An electric field which curves toward the negative electrode from the positive electrode is generated, which has an action in approximately reverse directions, with respect to the z crystal axis, in the two waveguides.

According to JP 07-191352, in this configuration the direction of action of the electric field in the two optical waveguides is only approximately reverse, so there is a large loss of electric field action compared to a case of perfectly reverse directions. In addition, in order to ensure the most effective action of the electric field on both optical waveguides, fine position adjustment is necessary, by way of example edge sections of the electrodes are matched to the optimum position in the central region of the optical waveguide device so that the dense section of the electric field is concentrated on the optical waveguides. High-precision position adjustment of this kind on the minute optical waveguides is extremely difficult and hinders productivity improvements. Furthermore, because the positive and negative electrodes are formed in alignment on the same surface of the crystal substrate, a phenomenon (DC drift) is generated in which the operation voltage fluctuates due to the presence of the buffer layer between both electrodes, and this presents a significant problem in terms of actual application.

In that document a device is therefore described which allegedly solves these problems. In the described device a pair of optical waveguides, formed on the surface of a z-cut lithium niobate crystal substrate, perform a mutual exchange of wave energy in a coupling area of the substrate. The z axis directions of the crystal, from which the optical waveguides are formed, are formed in mutually reverse directions, and opposing and parallel flat-plate positive and negative electrodes are arranged in the upper and lower surfaces of the crystal substrate. Based on this configuration, by the action of a linear, uniform and parallel electric field formed between the opposing flat-plate electrodes, an action in the respective reverse directions with respect to the z axis of the optical waveguides is effected.

According to that document, by virtue of the fact that the structure of the electrodes is an opposing structure, between which there is a dielectric, the DC drift phenomenon, which is generated between the electrodes and constitutes a problem of the prior-art devices, can be suppressed.

In view of the state of the art discussed, it has been an aim of the Applicant to find a solution to the problem of DC drift in integrated optical waveguide devices, which allows to substantially reduce that phenomenon both in devices having driving electrodes for externally applying a modulating electric field, such as for example phase modulators and intensity modulators, and in devices which do not require electrodes, for example frequency converters.

According to the present invention, an integrated optical waveguide device is provided which comprises:
a substrate of a ferroelectric material having a first and a second surfaces perpendicular to a direction of spontaneous polarization of the ferroelectric material, at least the second surface being substantially inactive with respect to an operation of applying an externally generated electric field to the substrate, and
at least one waveguide integrated in the substrate in correspondence of the first surface thereof.

At least a longitudinal waveguide section of the at least one waveguide is formed in a respective first substrate region having a first orientation of spontaneous polarization.

At least one second substrate region is provided on the first substrate surface, adjacent to said first substrate region transversally to the longitudinal waveguide section, and has a second orientation of spontaneous polarization, opposite to said first orientation, so as to develop an electric field component tangential to said first surface in consequence to polarization or free charges generated by one or more of the pyroelectric, piezoelectric and photovoltaic effects.

A material layer is further associated with said first surface and contains mobile charges so that, under the action of said tangential electric field component, a displacement of the mobile charges is induced which substantially compensates the polarization or free charges in the substrate to significantly reduce an electric field component perpendicular to the first surface at least where said longitudinal waveguide section is integrated.

Stated in other words, thanks to the present invention the electric fields generated by polarization charges which are created by means of the pyroelectric or piezoelectric effects, as well as free charges created by the photovoltaic effects, are not only made substantially uniform, but also substantially cancelled at least in correspondence of the substrate surface where the at least one waveguide is integrated.

In one embodiment, said first surface is an active surface with respect to the operation of applying an externally generated electric field to the substrate, and the device comprises a coplanar arrangement of electrodes associated with said first surface for externally applying a modulating electric field having a modulation frequency range for electro-optically modulating a refractive index in the waveguide. The second surface is instead free of electrodes. The material layer is interposed between the first surface and the electrodes and behaves substantially as an insulator in said modulation frequency range.

Preferably, said material layer is in this case a layer of silicon.

In one embodiment, the device comprises at least two waveguides forming respective arms of an interferometric electro-optical modulator. The at least two waveguides are formed, for at least a section thereof in the device modulation region, in respective substrate regions which have mutually opposed orientations of spontaneous polarization along an axis transversal to the waveguide sections.

Said respective substrate regions may be adjacent to each other along said transversal axis.

The at least one second substrate region may include at least two second substrate regions located at opposite sides of the waveguide section with respect to the longitudinal direction thereof and sandwiching therebetween said first substrate region.

In particular, the at least two waveguides may form respective arms of an interferometric electro-optical modulator, and be formed, for at least a section thereof, in said first substrate region.

In another embodiment, also the first surface is substantially inactive with respect to an operation of applying an externally generated electric field to the substrate, both the two surfaces being in this case free of electrodes.

In this case, said material layer is a layer of a metal.

Also in this case, said at least one second substrate region may include at least two second substrate regions located at opposite sides of the waveguide section with respect to the longitudinal direction thereof and sandwiching therebetween said first substrate region.

The features and advantages of the present invention will be made apparent by the following detailed description of some embodiments thereof, provided merely by way of nonlimiting example and illustrated in the annexed drawings, wherein:
Figure 1 is a simplified top-plan view of an integrated optical waveguide device according to a first embodiment of the present invention;
Figure 2 is a simplified cross-sectional view taken along line II-II in Figure 1;
Figures 3 and 4 are enlarged cross-sectional views similar to that of Figure 2, showing the distribution of the x and z components, respectively, of the electric field in the device;
Figure 5 is a simplified cross-sectional view of an integrated optical waveguide device according to a second embodiment of the present invention;
Figures 6 and 7 show the distribution of the x and z components, respectively, of the electric field in the device of Figure 5, for a first device dimensioning;
Figures 8 and 9 show the distribution of the x and z components, respectively, of the electric field in the device of Figure 5, for a second device dimensioning;
Figures 10 and 11 show the distribution of the x and z components, respectively, of the electric field in the device of Figure 5, for a third device dimensioning;
Figures 12 and 13 show the distribution of the x and z components, respectively, of the electric field in the device of Figure 5, for a fourth device dimensioning;
Figure 14 is a simplified cross-sectional view of an integrated optical waveguide device according to a third embodiment of the present invention;
Figures 15 and 16 show the distribution of the x and z components, respectively, of the electric field in the device of Figure 14, for a first device dimensioning, and
Figures 17 and 18 show the distribution of the x and z components, respectively, of the electric field in the device of Figure 14, for a second device dimensioning.

In the following, same reference numerals will be adopted to identify same, similar or corresponding parts in the different embodiments which will be described.

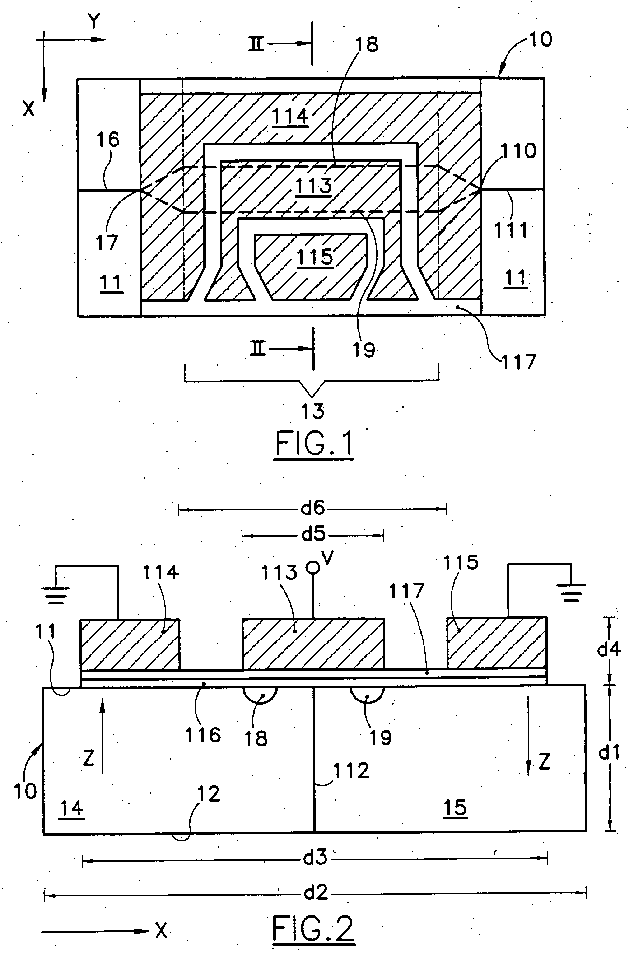

Figures 1 and 2 schematically show, respectively in top-plan view and in cross-sectional view, a device according to a first embodiment of the present invention. Specifically, the device is a coplanar waveguide (CPW) Mach-Zehnder integrated electro-optical modulator.

The device comprises a substrate **10** of z-cut ferroelectric material, for example an inorganic crystal such as LiNbO₃ or LiTaO₃, with a top surface **11** and a bottom surface **12** perpendicular to the z crystal axis.

The substrate **10** includes, at least in a device modulation region **13** intended for the interaction between optical fields and electric fields, at least two ferroelectric domain regions **14, 15** with mutually inverted ferroelectric domains, that is mutually inversely poled. This is schematically indicated in the drawings by means of a different, opposite orientation of the z crystal axis in the two regions **14**, **15:** towards the substrate top surface **11** in region **14**, towards the substrate bottom surface **12** in region **15**.

The device further .comprises, integrated by conventional techniques in the substrate **10** in correspondence of the top surface **11**, an input optical waveguide **16** or input channel, a first Y-junction **17** for splitting an input optical signal propagating along the input waveguide **16** into two optical signals propagating along two generally parallel optical waveguides **18, 19** extending for example in the y crystal axis direction and forming the interferometer arms, a second γ-junction **110,** spaced apart from the first γ-junction along the y axis, for combining the two optical signals into an output optical signal propagating along an output optical waveguide 111 or output channel.

The two waveguides **18, 19** are formed each in a respective ferroelectric domain region **14, 15**.

In the shown example, the two regions **14, 15** extend longitudinally to the waveguides **18, 19** for the whole length of the modulation region **13**. A boundary **112** between the two ferroelectric domain regions **14, 15** is located in an intermediate position between the two waveguides **14, 15** along the x crystal axis. This however is not to be considered limitative to the present invention, since the two regions **14** and **15** could for example extend for only a portion of the device modulation region **13**. In the latter case, each waveguide **18, 19** may pass through a longitudinal succession of regions similar to region **14, 15** and having alternated ferroelectric domain orientations.

In the modulation region **13** an arrangement of metal electrodes, preferably made of gold, is superimposed over the top surface **11** of the substrate **10**. The top surface **11** is therefore an active surface with respect to the operation of applying to the device an externally generated modulating electric field. No electrodes are instead provided on the bottom surface **112,** which is therefore an inactive surface with respect to the operation of applying the externally generated modulating electric field.

In particular, an electrode **113** is superimposed over the waveguides **18, 19** and extends for a longitudinal section thereof. Two electrodes **114**, **115** extend along the y axis laterally to the electrode **113.**

The electrodes **114** and **115** are intended to be electrically connected to a reference potential (ground), and act therefore as ground electrodes. The electrode **113** is intended to be electrically connected to a modulating potential **V,** and therefore acts as a hot electrode. The layout of the electrodes is properly designed so as to allow the operation of the device up to the microwave region of the spectrum of modulating electric field.

A stack of two layers **116**, **117** is interposed between the substrate top surface **11** and the electrodes **113**, **114, 115.** A lowermost layer **116** of the stack, or buffer layer, is conventionally provided for separating the metal electrodes from the optical fields in the waveguides **18, 19,** so to avoid attenuation of the optical fields. The buffer layer can be a layer of silicon dioxide or, preferably, a layer of benzo-cyclo-buthene (BCB) which has a slightly lower dielectric constant than silicon dioxide and consequently ensures a better phase matching between the optical modes and the modulating electric field, and lower losses especially in the case of a modulating electric field in the microwave spectrum range.

Over the buffer layer **116,** a layer **117** of a semiconductive material is provided. By semiconductive material a material is herein intended which is substantially non-conductive at the typical frequencies of the modulating electric field, while at lower frequencies, typical of the pyroelectric, piezoelectric or photovoltaic effects, such a material behaves as a conductor. A suitable material is for example silicon.

Each ferroelectric domain region has to be sufficiently large (in the direction transversal to the waveguides, that is in the x direction) to include the waveguide of one of the two interferometric modulator arms. Preferably the ferroelectric domain regions cover the whole transverse profile of the optical mode propagating through the respective waveguide. As far as the thickness of the ferroelectric domain regions is concerned, the deeper the inverted region from the waveguide surface, the greater the overlap of the change of refractive index with the optical mode, *i.e*. the effective refractive index change seen by the optical mode.

In order to modulate the optical signal entering the modulator, the electrodes **113, 114** and **115** are electrically connected to a time-variable voltage source, so that a modulating electric field is applied to the electrodes.

Albeit the direction and orientation of the modulating electric field is the same in the two waveguides **18, 19,** the fact that the latter are formed in substrate regions having mutually inverted ferroelectric domain orientations with opposite-sign electro-optic coefficients causes the refractive index of the two waveguides to undergo opposite changes and the optical signals propagating along such waveguides correspondingly undergo opposite phase shifts. Thus the device is said to have a push-pull configuration.

The Applicant has conducted numerical calculations on the structure of Figures 1 and 2 to study the distribution of the electric field in the modulation region.

For the sake of simplicity, the calculations have been conducted supposing that the metal electrodes **113, 114, 115** were grounded. In other words, the potential of the metal electrodes was set to zero (the same value as that at distances much larger than the substrate size) . In this way, the variation on the electric field distribution due to any charge separation (*i.e*. polarization changes in the LiNbO₃ ferroelectric domains) has been analysed. Given the linearity of the problem, any externally applied potential on the electrodes (for example the modulating voltages which ensure the functionality of the device) would not modify the variations on the electric field distribution calculated for grounded electrodes. In this model the layer **117** of semiconductive material, which is assumed to have an ideally infinite conductivity at low frequencies, results grounded.

With reference to Figure 2, the numerical calculations have been conducted on a device having the following dimensions:
substrate thickness **d1:** 1 mm;
substrate width **d2:** 2.4 mm;
thickness of layer **116:** 1 µm;
thickness of layer **117:** 1 µm;
overall thickness **d4** of the stack of layers **116, 117** and of
the metal electrodes: 30 µm;
overall width **d3** of the electrodes: 1 mm;
width **d5** of the hot electrode: 40 µm;
width **d6** of the gap between the ground electrodes: 80 µm;

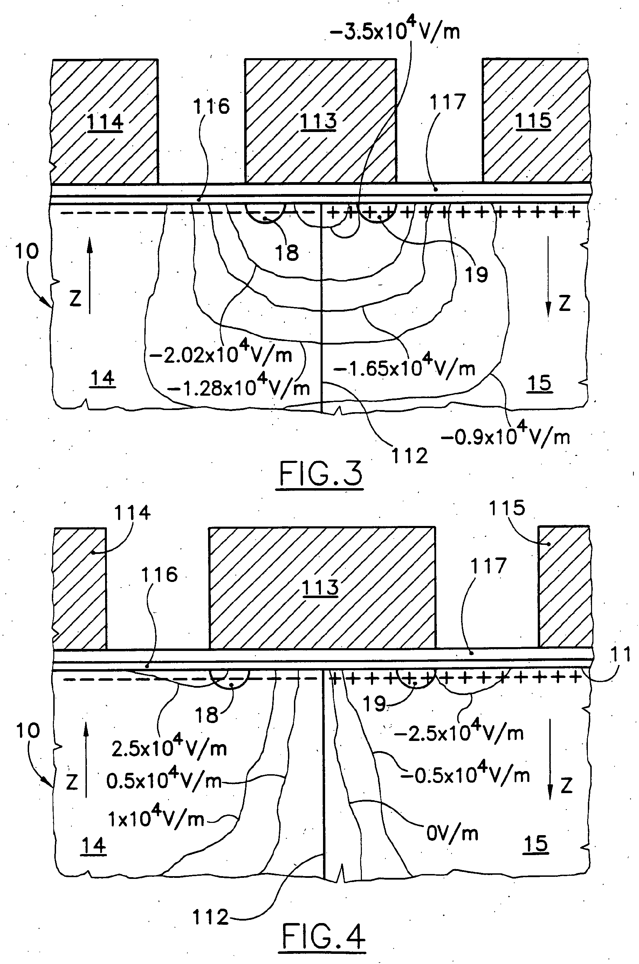

Figures 3 and 4 show the distribution of the electric field resulting from the numerical calculations. Specifically, Figure 3 shows the values of the x component Ex of the electric field, while Figure 4 shows the values of the z component Ez of the electric field that arise for a temperature change of one K degree.

Looking at Figure 4, it can readily be observed that the values of the Ez component of the electric field in the waveguide region ranges from 0 to 2.5x10⁴ V/m. This means that the Ez component is nearly one order of magnitude lower than that which would be produced in absence of the ferroelectric domain inversion. In fact, as previously mentioned, the Ez electric field component which develops in a single-domain lithium niobate substrate for each °K of temperature change is approximately 1.6x10⁵ V/m.

An explanation for this result is the following. Thanks to the presence of the two substrate regions **14** and **15** having oppositely oriented ferroelectric domains, the polarization charges induced in the substrate in correspondence of the two substrate surfaces **11, 12** have opposite signs in the two regions **14, 15.** In particular, while at the top surface of region **14** negative charges exist, the charges at the top surface of region **15** are positive. This is schematically indicated in Figures 3 and 4 by means of "+" and "-" signs just under the top surface **11** of the substrate.

The presence of charges of opposite sign at the surface of the two substrate regions **14, 15** generated by spontaneous polarization significantly reduces the Ez component of the electric field with respect to the case where the substrate forms a single ferroelectric domain.

Additionally, the presence of charges of opposite sign at the surface of the two substrate regions **14, 15** generated by a change in spontaneous polarization induces a strong Ex or tangential electric field component. Such an Ex component in turn induces surface currents in the semiconductive material layer **117**, which at these frequencies behaves as a conductor. A separation of charges is thus produced in the semiconductive material layer **117** and in the metal electrodes. The free charges generated in layer **117** and in the electrodes have opposite sign with respect to those at the top surface of the substrate, generated by a change in spontaneous polarization. These free charges at least partially compensate the polarization charges. This gives rise to a neutralization process in the waveguide region which further reduces the Ez component of the electric field in such a region.

Thanks to the above reasons, the detrimental effect on the device working point caused by polarization charges induced in the substrate material by temperature changes, mechanical stresses, light intensity is greatly attenuated.

It is worth noting that the presence of the metal electrodes over a large part of the substrate surface around the boundary between the regions **14** and **15** already allows for a reduction of the Ez component of the electric field. This effect is enhanced by the provision of the layer **117** of semiconductive material.

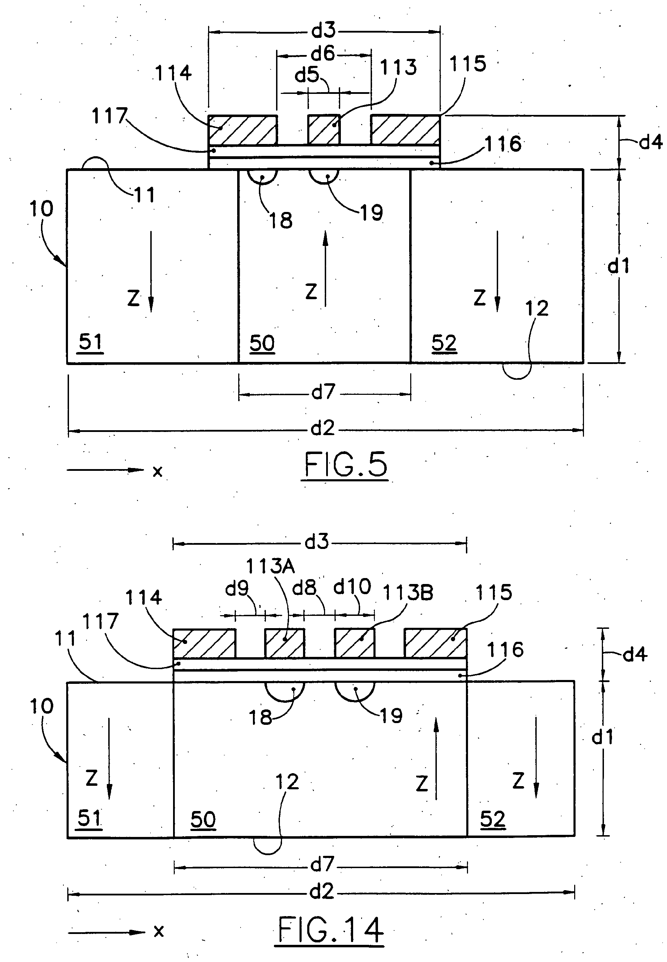

Figure 5 shows in simplified cross-sectional view an integrated optical waveguide device according to a second embodiment of the invention. Specifically, the device of this second embodiment is a coplanar waveguide ("CPW") Mach-Zehnder interferometric electro-optical modulator.

Differently from the device of Figures 1 and 2, in this case the two waveguides **18, 19** are formed in a same substrate region **50** constituting a single ferroelectric domain crystal region in which the ferroelectric domain has a first orientation, for example the "up" orientation shown in the drawing. The substrate region **50** is sandwiched between two substrate regions **51, 52,** also constituting single ferroelectric domain crystal regions, in which the ferroelectric domains have a second orientation, opposite to that of region 50, for example the "down" orientation.

Regions **50, 51** and **52** may extend for the whole length of the device modulation region or for only a portion thereof. In the latter case, the waveguides **18, 19** may pass through a lonngitudinal succession of regions similar to region **50** and having alternated ferroelectric domain orientations. Laterally to such a longitudinal succession, two other longitudinal successions of regions similar to regions **51** and **52** will be provided, also with alternated ferroelectric domain orientations.

One of the two waveguides, in the example waveguide **19,** is located under the central hot electrode **113.** The other waveguide **18** is located under one of the two ground electrodes, in the example electrode **114.**

As in the previous embodiment, between the metal electrodes and the substrate top surface **11** the stack of the buffer layer **116** and the semiconductive layer **117** is interposed.

The Applicant has conducted numerical calculations on the structure of Figure 5 for different values of the width of the central substrate region **50** (indicated as dimension **d7** in Figure 5), to analyse the dependence of the electric field in the waveguide regions on that parameter.

As for the previously described embodiment, the calculations have been conducted supposing that the metal electrodes **113, 114, 115** were grounded. An aim of the numerical calculations has in this case been to find out a value of dimension **d7** for which the contribution to the refractive index change due to any charge separation is as close as possible to zero: this means that the DC drift in the working point of the device will be negligible.

Referring to Figure 5, the numerical calculations have been conducted on a structure having the following dimensions:
substrate thickness **d1:** mm;
substrate width **d2:** 2.4 mm;
thickness of layer **116:** 1 µm;
thickness of layer **117:** 1 µm;
overall thickness **d4** of the stack of layers **116, 117** and of
the metal electrodes: 30 µm;
overall width **d3** of the electrode arrangement: 1 mm;
width **d5** of the hot electrode: 9 µm;
width **d6** of the gap between the ground electrodes: 57 µm.

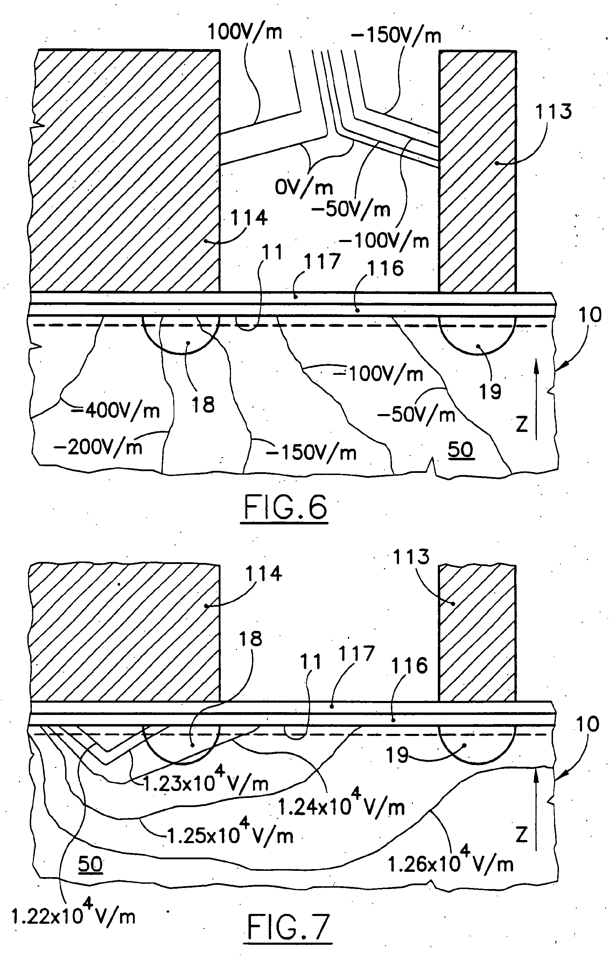

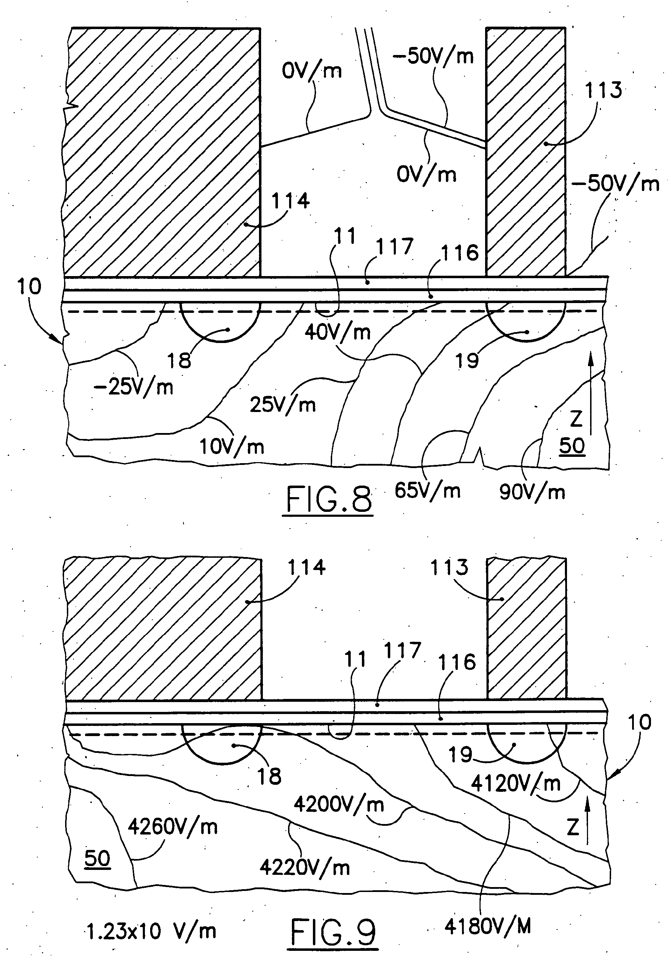

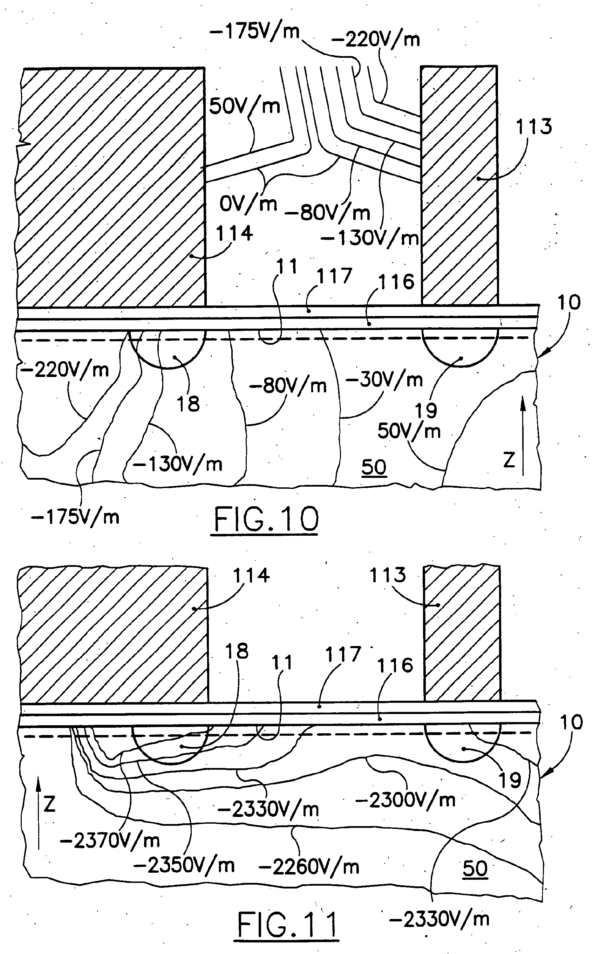

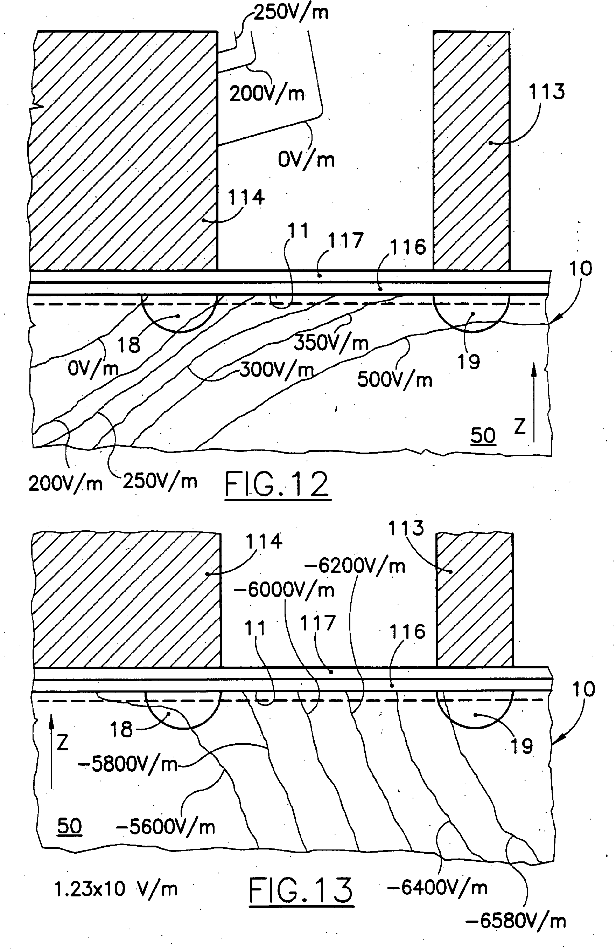

Figures 6 to 13 show the distribution of the electric field resulting from the calculations conducted. Specifically, Figures 6 and 7 show the values of the x and z components Ex and Ez of the electric field calculated for a value of dimension **d7** equal to 1.02 mm. Figures 8 and 9 show the values of the x and z components Ex and Ez of the electric field calculated for a value of dimension **d7** equal to 0.94 mm. Figures 10 and 11 show the values of the x and z components Ex and Ez of the electric field calculated for a value of dimension **d7** equal to 0.9 mm. Finally, Figures 12 and 13 show the values of the x and z components Ex and Ez of the electric field calculated for a value of dimension **d7** equal to 0.85 mm. In the calculations, a temperature change of one K degree is assumed.

The numerical calculations conducted show that, thanks to the provision of the two ferroelectric domain regions **51, 52** laterally to the ferroelectric domain region **50,** and the presence of the semiconductive layer **117,** the x component Ex of the electric field is quite low. Referring back to the explanation given in connection with the previously described embodiment, supposing that the semiconductive layer were absent, the provision of ferroelectric domain inversion determines the creation of a strong x component Ex of the electric field. Once the semiconductive layer **117** is provided for, such a strong Ex component induces separation of free charges in the semiconductive layer, which at least partially compensate the polarization charges generated in the substrate. As a consequence, also the z component Ez of the electric field, which is the component responsible of the DC drift in the device working point, is significantly reduced.

Considering the results of the numerical calculations reported in Figures 6 to 13, it is also possible to deduce that a value for dimension **d7** can be found for which both the electric field components Ex and Ez are minimised and in particular the Ez component is almost reduced to zero. For the structure of Figure 5, with the above dimensions, such a value for dimension **d7** is comprised between 0.9 and 0.94 mm. In fact, when dimension **d7** is reduced from 1.02 mm (Figures 6 and 7) to 0.94 mm (Figures 8 and 9), the Ez component of the electric field, still positive, is significantly reduced, going from approximately 1.22x10⁴ V/m to approximately 4.2x10³ V/m. A further reduction of dimension **d7** to 0.9 mm (Figures 10 and 11) causes the Ez component to become negative and approximately equal to -2.3x10³ V/m. A still further reduction of dimension **d7** to 0.85 mm (Figures 12 and 13) determines an increase in absolute value of the Ez component, which becomes approximately equal to -6x10³ V/m.

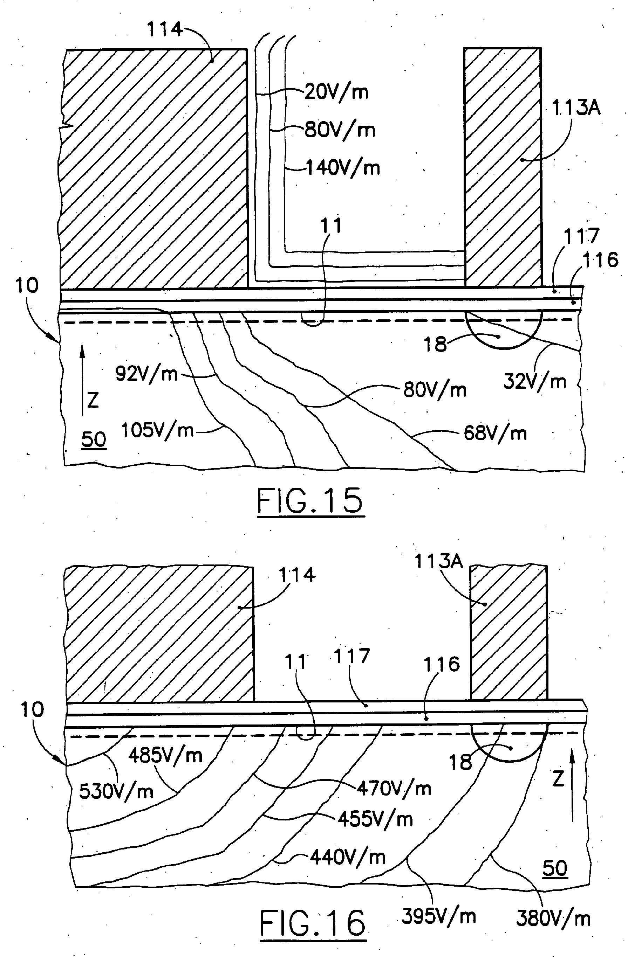

A device according to a third embodiment of the present invention is shown in Figure 14. Specifically, the device is in this case a double coplanar strip ("CPS") Mach-Zehnder interferometric intensity modulator, schematically shown in a cross-sectional view similar to that of Figure 5.

Similarly to the CPW Mach-Zehnder interferometric modulator of Figure 5, the two waveguides **18, 19** forming the interferometer arms are formed in a same substrate region **50** constituting a single ferroelectric domain crystal region in which the ferroelectric domain has, for example, the "up" orientation. The substrate region **50** is sandwiched between two substrate regions **51, 52**, also constituting single ferroelectric domain crystal regions, in which the ferroelectric domains have an orientation opposite to that of region **50**, for example the "down" orientation.

The device includes an arrangement of metal electrodes in correspondence of the substrate surface **11** where the waveguides **18, 19** are integrated. The electrode arrangement includes two hot electrodes **113A, 113B.** Each of the waveguides **18, 19** is located under a respective hot electrode **113A, 113B.** Ground electrodes **114** and **115** extend aside the pair of hot electrodes **113A, 113B.** Between the substrate surface **11** and the electrodes the stack of buffer layer **116** of silicon dioxide and layer **117** of semiconductive material is provided with.

As for the previous two embodiments, the Applicant has conducted numerical calculations on the structure of Figure 14 to analyse the distribution of the electric field.

Once again, the calculations have been conducted supposing that the metal electrodes **113A, 113B, 114** and **115** were grounded.

Figures 15 to 18 shows the distribution of the x and z components Ex, Ez of the electric field calculated for the structure of Figure 14, assuming the following dimensions:
substrate thickness **d1:** 1 mm;
substrate width **d2:** 2.4 mm;
overall width **d3** of the electrode arrangement: 0.94 mm;
overall thickness **d4** of the stack of layers **116, 117** and
electrodes: 30 µm;
thickness of the buffer layer **116:** 1 µm;
thickness of the semiconductive layer **117:** 1 µm;
width **d8** of the gap between the hot electrodes: 60 µm;
width **d9** of the gap between a hot electrode and the adjacent ground electrode: 20 µm;
hot electrode width **d10:** 9 µm.

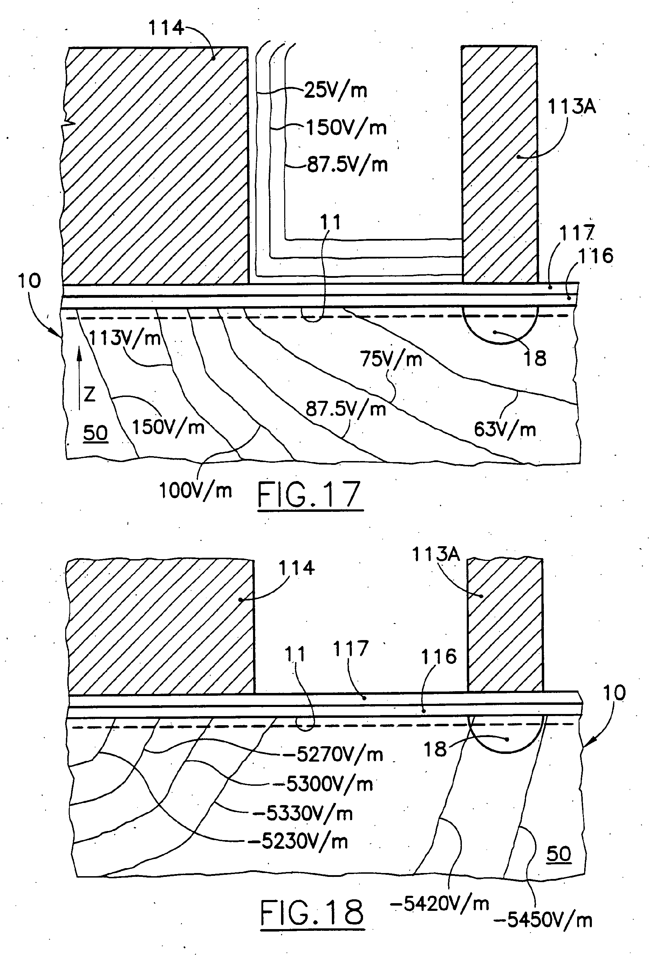

The value of dimension **d7,** that is the width of the substrate region **50** in which the waveguides are formed, is equal to 0.94 mm in Figures 15 and 16, while in Figures 17 and 18 such value is 0.9 mm.

As in the case of the structure of Figure 5, it can be deduced that the Ez component of the electric field, having detrimental effects on the DC drift of the device working point, is significantly reduced compared to a similar device structure in which no domain inversion and no semiconductive layer are provided. Additionally, a value for dimension **d7** can be found for which the Ez component of the electric field is almost reduced to zero. With the dimensions given above, such a value for dimension **d7** is comprised between 0.9 mm and 0.94 mm.

Albeit the embodiments of the invention so far described related all to Mach-Zehnder electro-optical modulators, this is clearly not to be intended as a limitation of the invention.

The invention also finds application in other types of devices.

For example, the invention can be applied to phase modulators, the operation of which is still based on an electro-optical modulation of the refractive index induced by a modulating electric field applied externally by means of driving electrodes.

The invention can also be applied to integrated optical waveguide devices whose operation does not require an externally applied modulating electric field and thus do not need driving electrodes. Both the substrate surfaces are in this case inactive with respect to an operation of applying to the device an externally generated modulating electric field. Such devices are for example frequency converters. In these devices, differently from the devices requiring driving electrodes, the problem of avoiding a short circuit between the electrodes does not exist. Therefore, the semiconductive layer **117** can be a layer of a material behaving as a conductor irrespective of the frequency range, such as a metal layer.

Concerning the method of formation of the differently oriented ferroelectric domain crystal regions, various techniques of domain inversion have already been reported which allow to fabricate LiNbO₃ crystals including regions of different polarity, thus presenting reversal of those properties which are dependent on the direction and orientation of the z crystal axis.

Some methods for achieving ferroelectric domain inversion rely on the diffusion of ions at high temperature, close to the crystal Curie point.

As reported for example in N. Ohnishi, 'An etching study on a heat-induced layer at the positive-domain surface of LiNbO₃', Jap. J. Appl. Phys., vol.16, p.1069 (1977), Li₂O outdiffusion at the z+ face of a LiNbO₃ crystal heated between 800-1100 °C for 1 to 20 hours can induce domain inversion.

In S. Miyazawa, 'Ferroelectric domain inversion in Ti-diffused LiNbO₃ optical waveguide', J. Appl. Phys., vol.50, p. 4599 (1979) it is reported that Ti-indiffusion, carried out at 950-1100 °C in air for 5 to 10 hours, can produce ferroelectric domain inversion on the z+ face.

K. Nakamura and H. Shimizu, 'Ferroelectric inversion layers formed by heat treatment of proton-exchanged LiTaO₃', Appl. Phys. Lett., vol. 56, p. 1535 (1990) reported that proton exchange followed by heat treatment close to the Curie temperature allowed ferroelectric domain inversion on the z+ face of LiNbO₃.

Cladding of SiO₂ followed by a heat treatment near the Curie temperature for several hours has also been used to stimulate Li₂O outdiffusion in LiNbO₃, as reported in M. Fujimura et al. 'Ferroelectric-domain inversion induced by SiO₂ cladding for LiNbO₃ waveguide SHG', Electronics Lett., vol. 27, p.1207 (1991), and ferroelectric domain inversion occurs on the z+ face under the coated area.

In L. Huang and N.A.F. Jaeger, 'Discussion of domain inversion in LiNbO₃', Appl. Phys. Lett., vol. 65, p. 1763 (1994) a simple model has been proposed in which ferroelectric domain inversion is associated to the space-charge field of a few hundred volts per centimetre resulting from NbLi defects and free electrons, which are produced by Li₂O outdiffusion at high temperature.

Another method to achieve ferroelectric domain inversion in LiNbO₃ and LiTaO₃, discussed for example in P.W. Haycock and P.D. Townsend, 'A method of poling LiNbO₃ and LiTaO₃ below Tc', Appl. Phys. Lett., vol. 48, p. 698 (1986), is based on the use of an electron beam. The first attempts were carried out at temperatures of about 600 °C (LiNbO₃) using small electric-fields of the order of 10 V/cm. The idea was that the oxygen ions combine in a molecular state smaller than the original single-ion state, making easier for the lithium ions to cross to the other side of the oxygen plane.

Any of the known ferroelectric domain inversion or poling techniques could in principle be used to form the ferroelectric domain regions provided for by the present invention.

However, the regions of ferroelectric domain inversion obtained by diffusion of ions at high temperature are usually shallow (to a few microns depth below the surface), thus suitable only for waveguide applications. In addition they can suffer from the fact that the domain shape is triangular (Ti indiffusion, Li₂O outdiffusion, SiO₂ cladding) or semicircular (proton exchange followed by heat treatment) giving sometimes a non-optimised overlap between the inverted region and the waveguide modes. The electron-beam irradiation technique can produce straight domains over the whole sample thickness (0.1 - 1 mm), giving the potential for improving the aforesaid overlap.

Other methods have been used to obtain ferroelectric domain inversion, including doping during Czochralski growth and laser heated pedestal crystal growth.

The most efficient poled devices to date have been obtained using the technique of electric field poling at room temperature, as discussed for example in M. Yamada et al., 'First-order quasi-phase-matched LiNbO₃ waveguide periodically poled by applying an external field for efficient blue second-harmonic generation', Appl. Phys. Lett., vol. 62, p. 435 (1993). High voltage pulses are applied to the z-cut substrate, so that the external electric fields are above the coercive field value (about 20 kV/mm for LiNbO₃), corresponding to which domain inversion occurs. The electric field poling technique allows to obtain straight domains over the whole thickness with a high degree of resolution (a few microns, as it has been shown by the periods fabricated for some quasi-phase-matched frequency conversion processes). In addition it is simpler and cheaper compared to the other methods.

As far as the thickness of inverted and non-inverted ferroelectric domain regions is concerned, it is not essential that such regions extend down to the bottom surface of the substrate. Referring for example to Figure 5, it is sufficient that the thickness of regions **50, 51** and **52** is comparable to the width of regions **50, 51** and **52**.

The various substrate regions can be formed before or after the formation of the waveguides.

It is to be noted that albeit in the embodiments discussed hereinbefore only the effects of polarization charges created by the pyroelectric effect have been taken into consideration, same conclusions can be reached also in the case polarization charges created by the piezoelectric effect or free charges created by the photovoltaic effect are considered.

Although the present invention has been disclosed and described by way of some embodiments, it is apparent to those skilled in the art that several modifications to the described embodiments, as well as other embodiments of the present invention are possible without departing from the scope thereof as defined in the appended claims.

## Claims

1. Integrated optical waveguide device comprising:
a substrate (**10**) of a ferroelectric material having a first (**11**) and a second (**12**) surfaces perpendicular to a direction of spontaneous polarization of the ferroelectric material, at least the second surface being substantially inactive with respect to an operation of applying an externally generated electric field to the substrate;
at least one waveguide (**18,19**) integrated in the substrate in correspondence of the first surface thereof;
at least a longitudinal waveguide section of the at least one waveguide being formed in a respective first substrate region (**14,15;50**) having a first orientation of spontaneous polarization,
**characterized by** further comprising:
at least one second substrate region (**15,14;51,52**) on the first substrate surface, adjacent to said first substrate region transversally to the longitudinal waveguide section and having a second orientation of spontaneous polarization, opposite to said first orientation, so as to develop an electric field component tangential to said first surface in consequence to polarization or free charges generated by one or more of the pyroelectric, piezoelectric and photovoltaic effects, and
a material layer **(117)** associated with said first surface and containing mobile charges so that, under the action of said tangential electric field component, a displacement of the mobile charges is induced which substantially compensates the polarization or free charges in the substrate to significantly reduce an electric field component perpendicular to the first surface at least where said longitudinal waveguide section is integrated.

2. Integrated optical waveguide device according to claim 1, in which said first surface is active with respect to the operation of applying an externally generated electric field to the substrate, the device comprising a coplanar arrangement of electrodes (**113,114,115;113A,113B,114,115**) associated with said first surface for externally applying a modulating electric field having a modulation frequency range for electro-optically modulating a refractive index in the waveguide, said second surface being free of electrodes, the material layer being interposed between the first surface and the electrodes and behaving substantially as an insulator in said modulation frequency range.

3. Integrated optical waveguide device according to claim 2, in which said material layer is a layer of silicon.

4. Integrated optical waveguide device according to claim 2 or 3, comprising at least two waveguides forming respective arms of an interferometric electro-optical modulator, the at least two waveguides being formed, for at least a section thereof in the device modulation region, in respective substrate regions which have mutually opposed orientations of spontaneous polarization along an axis transversal to the waveguide sections.

5. Integrated optical waveguide device according to claim 4, in which said respective substrate regions are adjacent to each other in said transversal direction.

6. Integrated optical waveguide device according to claim 2 or 3, in which said at least one second substrate region includes at least two second substrate regions located at opposite sides of the waveguide section with respect to the longitudinal direction thereof and sandwiching therebetween said first substrate region.

7. Integrated optical waveguide device according to claim 6, comprising at least two waveguides forming respective arms of an interferometric electro-optical modulator, the at least two waveguides being formed, for at least a section thereof, in said first substrate region.

8. Integrated optical waveguide device according to claim 1, in which also the first surface is substantially inactive with respect to an operation of applying an externally generated electric field to the substrate.

9. Integrated optical waveguide device according to claim 8, in which said material layer is a layer of a metal.

10. Integrated optical waveguide device according to claim 8 or 9, in which said at least one second substrate region includes at least two second substrate regions located at opposite sides of the waveguide section with respect to the longitudinal direction thereof and sandwiching therebetween said first substrate region.
